# EUROPÄISCHE PATENTSCHRIFT

(11) **EP 1 332 538 B1**
(45) Veröffentlichungstag und Bekanntmachung des Hinweises auf die Patenterteilung: **09.09.2009**
(21) Anmeldenummer: 01988963.3
(22) Anmeldetag: 25.10.2001
(51) Int. Cl.: H02H 7/085

(54) **VERFAHREN ZUM STEUERN EINES VERSTELLVORGANGS EINES TEILS**
METHOD FOR CONTROLLING AN ADJUSTMENT PROCESS FOR A PIECE
PROCEDE POUR COMMANDER UN PROCESSUS DE REGLAGE D'UNE PARTIE

(30) Priorität: 27.10.2000 DE 10048601
(43) Veröffentlichungstag der Anmeldung: 06.08.2003
(73) Patentinhaber: ROBERT BOSCH GMBH, 70442 Stuttgart (DE)
(72) Erfinder: LAMM, Hubert, 77876 Kappelrodeck (DE)
(86) Internationale Anmeldenummer: PCT/DE2001/004048
(87) Internationale Veröffentlichungsnummer: WO 2002/035674

(56) Entgegenhaltungen:
- EP-A- 1 174 975
- WO-A-98/50992
- DE-A- 3 514 223
- DE-A- 19 615 441
- DE-A- 19 901 840
- US-A- 5 422 551
- US-A- 5 668 451
- US-A- 5 801 501

## Beschreibung

### Stand der Technik

Die Erfindung betrifft ein Verfahren zum Steuern eines Verstellvorgangs nach der Gattung des Hauptanspruchs.

Es ist bekannt, Teile mit einem motorischen Antrieb zu kombinieren, welcher die Teile entlang eines Verstellweges bewegt. Die Teile können hierbei gegen wenigstens eine Endposition bewegt, insbesondere zwischen zwei Endpositionen hin- und herbewegt werden. Derartig bewegbare Teile werden beispielsweise in Kraftfahrzeugen als elektrische Fenster bzw. elektrisch betätigbare Schiebedächer oder Sitzverstellungen eingesetzt. Elektrische Schließvorrichtungen für Kraftfahrzeuge müssen Kraft Gesetzes eine Einklemmschutzfunktion bieten, die Verletzungen von Benutzern durch Einklemmen von Körperteilen weitgehend ausschließen soll.

Besonders problematisch ist es, den Einklemmschutz in der Motoranlaufphase zu realisieren, da es hierbei zum Überschwingen der Motordrehzahl kommt, wodurch irrtümlich der Einklemmschutz ausgelöst wird. Das Überschwingen wird erzeugt, indem die Drehzahl zuerst sehr schnell ansteigt, bis die Systemlose beseitigt ist und dann plötzlich abfällt, wenn das Teil beginnt sich zu bewegen. Die Systemlose setzt sich aus dem herstellungsbedingten mechanischen Spiel der einzelnen Komponenten des Verstellsystems zusammen.

Mit der DE 195 14 257 C1 ist ein Überwachungsverfahren eines Verstellsystems bekannt geworden, das auch in der Anlaufphase des Motors eine Einklemmschutzfunktion gewährleistet. Dabei wird mittels eines Sensors (Hallsensor) die Drehzahl bzw. Geschwindigkeit erfaßt, ein Periodenwert abgespeichert und mit einem vorgegebenen Grenzwert verglichen. Da sich in der Anlaufphase die Motorperiode recht stark verändert, liegt erst nach etwa drei Motorperioden ein eingeschwungener Zustand, d. h. ein gleichmäßiger Motorlauf vor, so dass auch erst dann eine zufriedenstellende Sicherheit gegenüber einer übermäßigen Kraftentfaltung gewährleistet ist. Deshalb wird der anfängliche Periodengrenzwert während der Motoranlaufphase aufgrund der gespeicherten Bezugswerte von der vorhergehenden Betätigung des Motors vorausberechnet. Der anfängliche Periodengrenzwert (PGW*) wird dabei vorzugsweise auf der Basis des letzten Periodenwertes (PWvn) der vorangegangenen Verstellung nach der Formel PGW* = 2 * PWvn * (0,5 + E^{-t/τ}) bestimmt. Dieses Verfahren ist sehr komplex und aufwendig und ist vom vorangegangenen Verstellvorgang abhängig. Voraussetzung für ein solches Verfahren ist, dass die Meßwerte (Periodenwerte) kontinuierlich abgespeichert und für den nächsten Motorstart zur Verfügung gestellt werden können. Außerdem ist dieses Verfahren beschränkt auf die Verwendung der Drehzahl bzw. Geschwindigkeit als Sensorsignal für die Einklemmschutzfunktion.

Das erfindungsgemäße Verfahren mit den Merkmalen des Hauptanspruchs hat den Vorteil, dass ein Einklemmereignis beim Verstellen eines Teils schon in der Anlaufphase des Motors sicher detektiert werden kann. Die Lösung der Erfindung besteht darin, den Motor in der Anlaufphase mit geringerer Leistung anzusteuern, um ein Überschwingen der Motordrehzahl, und somit eine störende Fehlauslösungen des Einklemmschutzes wirksam zu verhindern. Es ist deshalb nicht notwendig, den Einklemmschutz in der Anlaufphase des Motors zu deaktivieren. Mit dem erfindungsgemäßen Verfahren kann auch dann mit hoher Sicherheit ein Einklemmereignis erkannt werden, wenn z. B. bei geöffnetem Fenster ein Gegenstand oder Körperteil passgenau in die Fensteröffnung eingeführt, und erst dann die Schließvorrichtung des Fensters betätigt wird. Besonders vorteilhaft ist dabei, dass dieses Verfahren auf viele gängige Verstellvorichtungen ohne großen Aufwand angewendet werden kann, unabhängig von verschiedenen komplexeren Auswertungsalgorithmen für die Einklemmschutzfunktion.

Mit der DE-A-199 01 840 ist ein elektrischer Stellantrieb - insbesondere für elektrische Fensterheber - bekannt geworden, bei dem der Motorstrom in Abhängigkeit von einer Ist-Drehzah/-Drehmoment geregelt wird. Dabei kann das Anlaufdrehmoment begrenzt werden, und der Antrieb sanft zum Anlaufen gebracht werden, wobei anschließen der maximale Motorstrom beispielsweise treppenförmig reduziert wird.

Die DE-A-196 15 441 zeigt ein Verfahren zum Betreiben eines Antriebmotors für elektrische Fensterheber, bei dem der Motorstrom und/oder die Motorspannung für einen Sanftanlauf langsam hochgeregelt werden, wobei auf den Minimalwert und den Maximalwert für den Motorbetriebswert zurückgegriffen werden kann.

### Vorteile der Erfindung

Erfindungsgemäß ist vorgesehen, daß die Leistung zu Beginn der Anlaufphase so gesteuert wird, dass sich der Motor gerade bewegt und das mechanische Spiel des Verstellsystems beseitigt, aber das bewegbare Teil noch nicht verstellt wird. Dadurch dass die Systemlose mit geringer Leistung beseitigt wird, kommt es zu keinem Überschwingen der Motorumdrehung bzw. des Sensorsignals für die Einklemmschutzfunktion. Damit ist ein sicherer Einklemmschutz ohne Fehlauslösung in der Anlaufphase des Motors möglich.

Durch die in den Unteransprüchen ausgeführten Merkmale sind vorteilhafte Weiterbildungen des Verfahrens nach dem Hauptanspruch möglich. Wird die Leistung des Motors reduziert, indem dieser über eine in Pulsweitenmodulation betriebene Leistungsendstufe angesteuert wird, hat das den Vorteil, dass keine Verlustleistung und damit auch keine Wärme an der Leistungsendstufe abfällt. Somit ist eine präzise Leistungsregelung ohne zusätzlichen Kühlaufwand gewährleistet.

Alternativ kann die Leistung des Motors durch eine angelegte, variable Spannung reduziert werden. Hierfür eignen sich variable Widerstände, Transistoren oder derart bekannte Bauteile. Dabei ist besonders vorteilhaft, dass bei dieser präzisen Art der Leistungsreduzierung keine elektromagnetische Störungen auftreten, die aufwendige Entstörmaßnahmen der Steuerschaltung bedürfen.

Wird der Motor, nachdem die Systemlose beseitigt ist, mit maximaler Leistung (Nennleistung) angesteuert, wird das Teil schnell und effizient ohne merkliche Zeitverzögerung verstellt.

Dabei ist es besonders einfach zu realisieren, die Leistung linear bis zur Nennleistung zu erhöhen, um ein Überschwingen der Motordrehung zu verhindern. Außerdem werden dadurch auch unangenehme Geräusche beim Verstellvorgang vermieden.

Durch die Berücksichtigung der tatsächlichen Batteriespannung für die Leistungsansteuerung kann die Leistung exakt so eingestellt werden, dass die Systemlose beseitig, aber das bewegbare Teil noch nicht verstellt wird. Die am Motor anliegende Klemmenspannung kann dabei unabhängig von der tatsächlichen Batteriespannung mittels Leistungsansteuerung so geregelt werden, dass sich die Leistung, und damit die Verstellkraft nicht unerwünscht erhöht.

Dasselbe gilt, wenn bei der Leistungsansteuerung die Umgebungstemperatur berücksichtigt wird, da dadurch deren Einfluß auf das Verstellsystem und die Steuerschaltung eliminiert werden kann. Eine unerwünschte Erhöhung der Leistung bzw. der Verstellkraft wird dadurch verhindert.

Wird der Einklemmschutzes sofort aktiviert, sobald sich das Teil in Bewegung setzt, bietet die Verstellvorrichtung optimale Sicherheit, was von Kraftfahrzeugherstellern zunehmend gefordert wird.

In einer bevorzugten Ausgestaltung der Erfindung wird als Betriebsgröße des Motors eine zur Verstellkraft des Teils inverse Größe verwendet. Solche Betriebsgrößen können in einfacher Weise mittels Hallsensoren gemessen werden. Somit ist kein zusätzlicher Sensoraufwand für herkömmliche Verstellsysteme notwendig.

Wird als inverse Größe die Drehzahl verwendet, kann diese gleichzeitig mit dem Verstellweg erfaßt werden. Die Drehzahl stellt eine sehr anschauliche Meßgröße dar, die das Überschwingen der Motorumdrehung, bzw. dessen Vermeidung direkt anzeigt.

Eine andere Möglichkeit für das Sensorsignal der Einklemmschutzfunktion stellt eine zur Verstellkraft des Teils proportionale Größe dar. Wird als Sensorsignal der Motorstrom verwendet, kann vorteilhafter Weise auf Hallsensoren verzichtet werden. Es kann aber auch ein Kraftsensor verwendet werden, der direkt die Verstellkraft des Teils detektiert.

Von besonderem Vorteil ist, dass das erfindungsgemäße Verfahren zum Detektieren von Einklemmereignissen in der Motoranlaufsphase in einfacher Weise auf bestehende Verstellsysteme mit unterschiedlicher Sensorik angewendet werden kann.

### Zeichnung

In der Zeichnung sind Ausführungsbeispiele eines erfindungsgemäße Verfahrens dargestellt und in der nachfolgenden Beschreibung näher erläutert. Es zeigen
Fig. 1 eine schematische Anordnung zur Durchführung des erfindungsgemäßen Verfahrens,
Fig.2 die Steuerschaltung eines alternativen Ausführungsbeispiels,
Fig. 3 den Verlauf der Pulsweitenansteuerung des Motors aus Fig. 1,
Fig. 4 den Graph einer Leistungsregelung in Abhängigkeit der Batteriespannung
Fig. 5a und 5b den Drehzahlverlauf des Motors aus Fig. 1 ohne und mit Anwendung des erfindungsgemäßen Verfahrens.

### Beschreibung der Ausführungsbeispiele

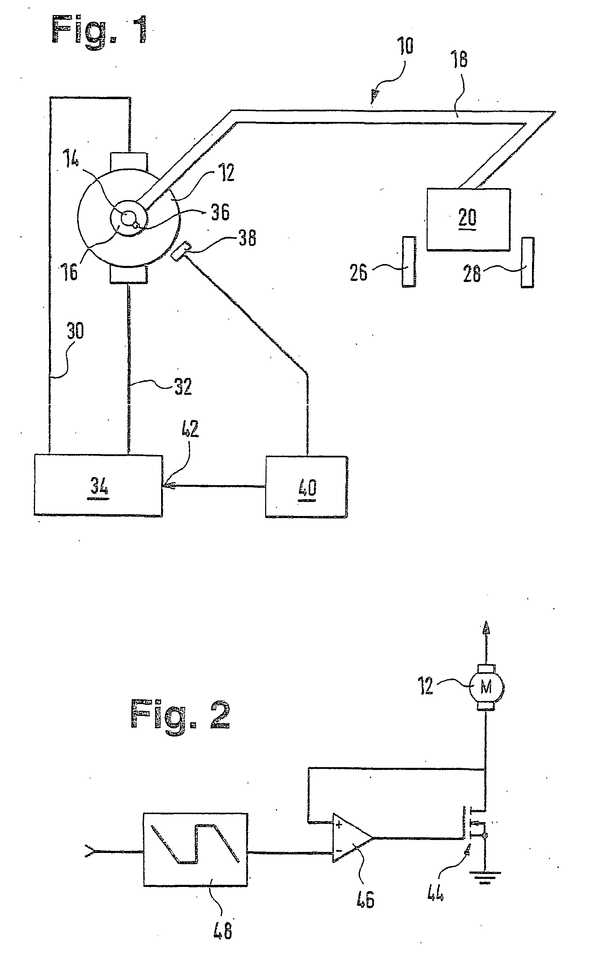

In Fig. 1 ist schematisch ein Verstellsystem 10 zum Verstellen eines Teils 20 dargestellt. Das Verstellsystem 10 weist einen Elektromotor 12 auf mit einer Antriebswelle 14, die in ein lediglich angedeutetes Getriebe 16 eingreift. Das Getriebe 16 ist über eine Übertragungseinrichtung 18 mit einem zu verstellenden Teil 20 verbunden. Das Teil 20 ist mittels des Elektromotors 12 zwischen einem ersten Endanschlag 26 und einem zweiten Endanschlag 28 hin- und herbewegbar. Der Elektromotor 12 ist über Motoranschlußleitungen 30 bzw. 32 mit einer Steuerschaltung 34 verbunden. Die Antriebswelle 14 des Elektromotors 12 trägt wenigstens einen Signalgeber 36, dessen Signale von einem Sensorsystem 38 erfaßbar sind. Das Sensorsystem 38 ist mit einer Auswerteschaltung 40 verbunden, welche wiederum mit einem Eingang 42 der Steuerschaltung 34 verbunden ist.

Das in Fig. 1 gezeigte Verstellsystem 10 kann beispielsweise bei der Verstellung elektrischer Fensterheber oder elektrischer Schiebedächer in Kraftfahrzeugen Verwendung finden. Dies stellt jedoch lediglich zwei mögliche Anwendungsbeispiele dar. So ist es selbstverständlich möglich, das Verstellsystem 10 bei allen weiteren Anwendungen einzusetzen, bei denen ein Teil 20 gegen wenigstens einen Endanschlag 26, 28 verfahrbar ist. Diese Anwendungen beschränken sich nicht auf Ausstattungsmöglichkeiten in Kraftfahrzeugen.

Für die Realisierung des Einklemmschutzes erzeugt das Sensorsystem 38 über den Signalgeber 36 ein Meßsignal, das einer Betriebsgröße des Motors 12 entspricht (beispielsweise Motordrehzahl). Diese kontinuierlich gemessene Betriebsgröße wird nun in der Auswerteschaltung 40 überwacht. Bei einer plötzlichen Änderung der Betriebsgröße (Drehzahlabfall) gegenüber dem Verstellweg, wird diese Änderung mit einem vorgegebenen Grenzwert der Betriebsgrößenänderung verglichen. Bei Überschreiten des Grenzwertes gibt die Auswerteschaltung 40 ein Signal an die Steuerschaltung 34, um den Motor 12 zu stoppen und/oder in seine Laufrichtung umzukehren. Die Steuerschaltung 34 beinhaltet auch eine Anordnung, mit der die Leistung des Motors 12 variiert werden kann. Dazu wird ein Steuersignal, das eine Halbleiterleistungsendstufe des Motors 12 ansteuert, pulsweitenmoduliert. Dadurch ist es möglich, den Motor 12 in seiner Anlaufphase 52 mit geringerer Leistung anzusteuern, als in der normalen Betriebsphase 54.

Fig 2 zeigt das Blockschaltbild der Steuerschaltung 34 eines alternativen Ausführungsbeispiels. Hier wird die Leistung des Motors 12 nicht durch Pulsweitenmodulation reduziert, sondern durch das direkte Anlegen einer variablen Spannung an den Motor 12. Dazu beinhaltet die Steuerschaltung 34 einen steuerbaren linearen Widerstand 44, beispielsweise ein bipolarer Transistor 44 oder ein MOS-Feldeffekttransistor 44. Der steuerbaren Widerstand 44 wird von einer Regelschaltung 46, die beispielsweise eine einfache Verstärkerschaltung mit Operationsverstärker sein kann, angesteuert. Die Regelschaltung 46 gewährleistet, dass die an dem Motor 12 anliegende Spannung beim Anlaufen des Motors 12 linear steigt. Zu diesem Zweck wird ein entsprechendes Steuersignal 48 verwendet, wodurch der steuerbare Widerstands 44 eine variable Spannung für den Motor 12 zur Verfügung stellt, mit der dessen Leistung reduziert werden kann.

Wesentlicher Bestandteil des erfindungsgemäßen Verfahrens ist, dass der Motor 12 mit verringerter Leistung gefahren wird, bis die Systemlose des Verstellsystems 10 beseitigt ist. Zunächst wird nach Betätigung eines nicht dargestellten Schaltmittels der Elektromotor 12 über die Steuerschaltung 34 in Bewegung versetzt. Über die rotierende Antriebswelle 14 wird hierbei das Getriebe 16 gekämmt, so dass sich mittels der Übertragungseinrichtung 18 das Teil 20 gegen einen der Endanschläge 26 bzw. 28 bewegt. Mit Inbetriebsetzung des Elektromotors 12 findet zuerst ein Ausgleich der Systemlose der mechanischen Komponenten des Verstellsystems 10 statt. Die Systemlose läßt sich beschreiben als das Spiel zwischen den mechanischen Komponenten des Verstellsystems 10. Im Ausführungsbeispiel nach Fig. 1 sind dies der Eingriff der Antriebswelle 14 in das Getriebe 16, sowie die Übertragung der Drehbewegung auf die Übertragungseinrichtung 18 mit dem zu verstellenden Teil 20. Außerdem wird in den elastischen Teilen des Systems eine mechanische Spannung aufgebaut, die einer gewissen Motorumdrehung entspricht, bevor sich das Teil 20 bewegt. Das bedeutet, dass sich beispielsweise bei einer Richtungsumkehr des Verstellvorgangs die Antriebswelle 14 des Elektromotors 12 schon dreht, ohne dass sich das Teil 20 bewegt. Die Systemlose tritt aber nicht nur bei Richtungsumkehr des Verstellsystems 10 in Erscheinung, sondern zu einem gewissen Grad bei jedem neuen Start des Elektromotors 12.

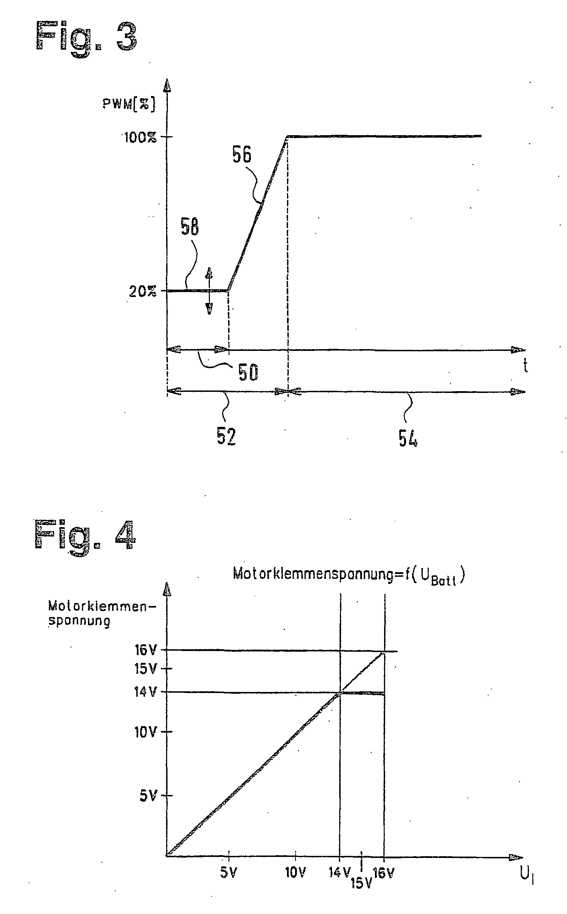

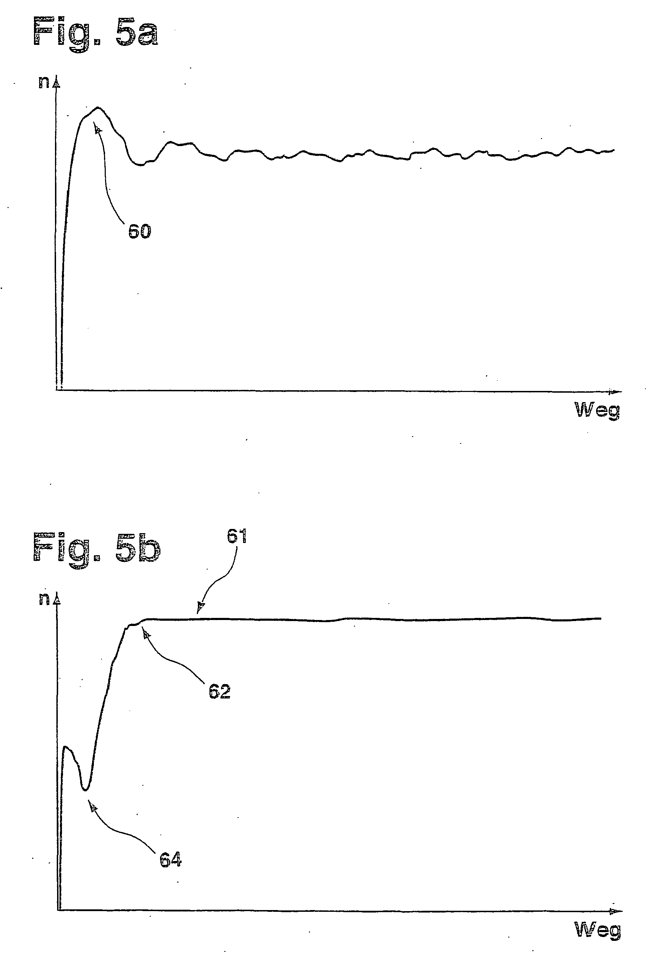

Fig. 3 zeigt den erfindungsgemäßen Verlauf der Leistungsansteuerung des Motors 12 mittels Pulsweitenmodulation gemäß Fig. 1. Als Startwert wird eine Pulsweite, d. h. die Zeit, in der eine Spannung an der Halbleiterendstufe anliegt, von 20% vorgesehen. Diese Leistung reicht aus, um den Motor gerade zu bewegen, ist aber zu gering um das Teil 20 in Bewegung zu versetzen. Der Startwert der Pulsweite ist vom jeweiligen Verstellsystem 10 abhängig und wird jeweils experimentell ermittelt. Die Pulsweite wird so lange konstant gehalten, bis die Systemlose vollständig beseitigt ist, was der Zeitspanne t_{systemlose} 50 auf der Zeitachse in Fig. 3 entspricht. Anschließend wird die Pulsweite auf 100% erhöht, um den Motor dann in seiner normalen Betriebsphase mit maximaler Leistung zu betreiben. Die Dauer der Motoranlaufphase 52 - die Zeit, bis wann der Motor seine maximale Leistung erreicht hat - ist von der Wahl der Startpulsweite und dem Anstieg der Pulsweite abhängig. Die Steigerung der Pulsweite nach dem Beseitigen der Systemlose wird so gewählt, dass einerseits die normale Betriebsphase 54 so schnell wie möglich erreicht wird, andererseits aber ein Überschwingen der Motorumdrehung (siehe Fig. 5) verhindert wird. Die einfachste Möglichkeit ist ein linearer Anstieg der Pulsweite, es kann aber auch ein anderer Verlauf gewählt werden, der vorgenannte Bedingungen erfüllt.

Um den geeigneten Startwert der Leistung während t_{systemlose} 50 einzustellen, wird die Umgebungstemperatur und die Batteriespannung gemessen und für die Ermittlung des Startwerts der Leistung berücksichtigt. Ist die Batteriespannung beispielsweise höherer als der Nennwert, wird dies durch eine entsprechend niederere Startpulsweite ausgeglichen. Eine solche Leistungsregelung in Abhängigkeit der Batteriespannung ist in Fig. 4 während der normalen Betriebsphase 54 dargestellt. Für die maximale Leistung (Nennleistung) wird beispielsweise eine Motorklemmenspannung von 14 V definiert. Überschreitet die Batteriespannung diesen Wert, wird zum Aufrechterhalten der vordefinierten Nennleistung (bei 14 V Klemmenspannung) die Motorklemmenspannung mittels Pusweitenmodulation auf ihren Nennwert reduziert. Bei einer Batteriespannung von 16 V wird die Leistungsendstufe deshalb mit 14/16 * 100% (87,5%) angesteuert, um die Nennleistung bezüglich 14 V Motorklemmenspannung zu erhalten. Soll die Leistung zu Beginn der Motoranlaufphase beispielsweise nur 20 % der Nennleistung betragen, so wird die Pulsweite von 20 % bei einer anliegenden Batteriespannung von 16 V auch um den Faktor 14/16 reduziert. Dadurch wird verhindert, dass zu Beginn der Anlaufphase 52 so große Verstellkräfte auftreten, die das Teil 20 schon in Bewegung versetzen.

Ebenso wird der Einfluß der Umgebungstemperatur auf die Steuerelektronik und das mechanische Verstellsystem kompensiert, um den Startwert der Leistung exakt so zu bestimmen, dass dieser gerade ausreicht, um die Systemlose zu beseitigen.

In einer Variante des Ausführungsbeispiels wird unter Berücksichtigung der Batteriespannung und der Umgebungstemperatur ein konstanter Spannungswert errechnet, der mittels Pulsweitenmodulation geregelt, an den Elektromotor 12 als Startwert angelegt wird.

Die Dauer der Motoranlaufphase 52 liegt beispielsweise bei einem Fensterhebersystem unter 0,5 Sek. Deshalb ist die Zeitverzögerung des Verstellvorgangs durch die Reduzierung der Leistung in der Anlaufphase 52 für den Bediener kaum merkbar. Aber der Gewinn dieser geringfügigen Zeitverzögerung ist, dass der Einklemmschutz sofort aktiv ist, sobald sich das Teils 20 in Bewegen setzt.

In Fig. 5a ist der Drehzahlverlauf des Elektromotors 12 über dem Verstellweg ohne das erfindungsgemäße Verfahren der Leistungsabsenkung in der Motoranlaufphase 52 dargestellt. Die Drehzahl stellt hier eine Betriebsgröße des Motors dar, die mittels des Sensorsystems 38 kontinuierlich gemessen wird (in Abhängigkeit der Anzahl der Pole des Ringmagneten). Mit Inbetriebsetzen des Elektromotors 12 wird sofort die volle Nennleistung über ein Relais angelegt. Zu Beginn der Motoranlaufphase 52, während die Systemlose überwunden wird, beschleunigt der Motor 12 so stark, dass die Drehzahl über der Nenndrehzahl der normalen Betriebsphase 54 liegt. Sobald die Systemlose überwunden ist, stellt sich die Gegenkraft der normalen Betriebsphase 54 ein, die durch das Verstellen des Teils 20 erzeugt wird. Dadurch wird der Motor 12 abgebremst, die Drehzahl erniedrigt sich entsprechend und bleibt dann auf einem näherungsweise konstanten Wert, der einer konstanten Gegenkraft entspricht. Das Überschwingen 60 bzw. der Abfall der Motordrehzahl wird dabei irrtümlich als Einklemmereignis interpretiert, da zu dessen Detektion überprüft wird, ob die Drehzahl im Verlauf des Verstellweges sinkt, und damit die aufgebrachte Kraft des Motors 12 steigt. Deshalb wird bei diesem herkömmlichen Verfahren der Einklemmschutz erst dann aktiviert, wenn die Drehzahl ihren eingeschwungenen Zustand erreicht hat.

Auch bei anderen herkömmlichen Verfahren zum Einklemmschutz mit einem vorgegebenen unteren Grenzwertverlauf der Motordrehzahl über dem Verstellweg, kann in der Anlaufphase 54 ein Einklemmereignis nicht detektiert werden, weil es immer zum Überschwingen der Motordrehzahl aufgrund der Systemlosen kommt, egal ob ein Hindernis eingeklemmt ist oder nicht.

Fig. 5b zeigt den entsprechenden Drehzahlverlauf unter Verwendung des erfindungsgemäßen Verfahrens, d. h. der Motor 12 wird zu Anfang nur mit geringer Leistung angesteuert, so dass gerade die Systemlose beseitigt wird, ohne dass der Motor 12 zu stark beschleunigt wird. Die Drehzahl fällt deshalb nach Beseitigung der Systemlosen wieder ab, und der Motor 12 würde zum Stillstand kommen, wenn die Leistung jetzt nicht erhöht würde. Aber durch die nun einsetzende lineare Steigerung der Leistung auf ihren Maximalwert, steigt auch die Drehzahl entsprechend auf ihren Nennwert 61 an. Damit wird ein Überschwingen der Motordrehzahl zuverlässig verhindert 62, der Einklemmschutz kann zeitgleich mit dem Einsetzen 64 der Steigerung der Leistung bzw. mit der Inbewegungsetzung des Teils 20 aktiviert werden.

Anstelle der Motordrehzahl kann in einer Variante des Ausführungsbeispiels auch eine andere zur Verstellkraft des Teils 20 inverse Betriebsgröße verwendet werden, wie z. B. die Geschwindigkeit.

In einer weiteren Variation des Ausführungsbeispiels wird als Betriebsgröße der Motorstrom gemessen. Dieser ist direkt proportional zur Verstellkraft des Teils 20. Hierbei wird zur Detektion eines Einklemmereignisses der Anstieg des Motorstroms mit einem maximal erlaubten vorgegebenen Anstieg verglichen. Der Motorstrom ist zu Beginn der Motoranlaufphase 52 minimal und steigt sprungartig nach t_{Systemlose} 50 auf seinen maximalen Wert, wenn der Motor 12 von Beginn mit voller Leistung betrieben wird. Wird hingegen nach dem erfindungsgemäßen Verfahren die Leistung zu Beginn der Motoranlaufphase 52 beschränkt, und erst nach Beseitigung der Systemlose linear erhöht, wird ein plötzlicher Anstieg des Motorstroms in der Motoranlaufphase 52 verhindert. Somit kann auch mit dem Motorstrom als Betriebsgröße ein Einklemmschutz in der Motoranlaufphase 52 realisiert werden.

Anstelle des Motorstromes als Betriebsgröße kann in einem alternativen Ausführungsbeispiel auch ein Sensorsignal verwendet werden, das z. B. direkt aus der Messung der Verstellkraft eines Teils 20 gewonnen wird. Dieses Signal ist natürlich, wie der Motorstrom, proportional zur Verstellkraft. Die Detektion eines Einklemmereignisses verläuft dashalb identisch zu obiger Ausführungsvariante mit dem Motorstrom als Betriebsgröße.

## Patentansprüche

1. Verfahren zum Steuern eines Verstellvorgangs mindestens eines Teils (20), das mittels eines Elektromotors (12) gegen wenigstens einen Endanschlag (26, 28) bewegbar ist, insbesondere ein Kraftfahrzeug- Fenster oder -Schiebedach, wobei in Abhängigkeit von mindestens einer Betriebsgröße des Motors (12) Einklemmereignisse detektiert werden, und bei Erkennen eines Einklemmereignisses der Motor (12) gestoppt und/oder in seiner Laufrichtung umgekehrt wird, wobei der Motor (12) in seiner Anlaufphase (52) mit geringerer Leistung angesteuert wird, als in der anschließenden Betriebsphase (54), **dadurch gekennzeichnet, dass** die Leistung zu Beginn der Anlaufphase (52) so gesteuert wird (z.B. 20% der Nennleistung), dass sich der Motor (12) gerade bewegt und die Systemlose beseitigt, aber ein Verstellen des bewegbaren Teils (20) noch nicht erfolgt, wobei die Drehzahl des Elektromotors (12) nach Beseitigung der Systemlose abfällt, und der Elektromotor (12) zum Stillstand kommen würde, wenn anschließend die Leistung nicht erhöht werden würde.

2. Verfahren nach Anspruch 1, **dadurch gekennzeichnet, dass** der Motor (12) über eine Leistungsendstufe angesteuert wird, deren Steuersignal zum Zwecke der Leistungsreduzierung pulsweitenmoduliert wird.

3. Verfahren nach Anspruch 1, **dadurch gekennzeichnet, dass** an den Motor (12) zum Zwecke der Leistungsreduzierung eine variable Spannung angelegt wird, die vorzugsweise mittels eines steuerbaren Widerstand (44) bereitgestellt wird.

4. Verfahren nach Anspruch 2, **dadurch gekennzeichnet, dass** die Pulsweite so lange konstant gehalten wird, bis die Systemlose vollständig beseitigt ist, was einer Zeitspanne t_{systemlose} (50) entspricht.

5. Verfahren nach Anspruch 1 bis 4, **dadurch gekennzeichnet, dass** der Motor (12) mit der Nennleistung (Maximalleistung) angesteuert wird, nachdem die Systemlose beseitigt ist.

6. Verfahren nach einem der Ansprüche 1 bis 4, **dadurch gekennzeichnet, dass** die Leistung linear erhöht wird, nachdem die Systemlose beseitigt ist.

7. Verfahren nach einem der Ansprüche 1 bis 6, **dadurch gekennzeichnet, dass** die Leistung, mit der der Motor (12) in der Motoranlaufphase (52) angesteuert wird, von der Batteriespannung abhängt.

8. Verfahren nach einem der Ansprüche 1 bis 7, **dadurch gekennzeichnet, dass** die Leistung, mit der der Motor (12) in der Motoranlaufphase (52) angesteuert wird, von der Umgebungstemperatur abhängt.

9. Verfahren nach einem der Ansprüche 1 bis 8, **dadurch gekennzeichnet, dass** Einklemmereignisse sofort detektierbar sind, sobald sich das Teil (20) in Bewegung setzt.

10. Verfahren nach einem der Ansprüche 1 bis 9, **dadurch gekennzeichnet, dass** als Betriebsgröße eine zur Verstellkraft des Teils (20) inverse Größe verwendet wird.

11. Verfahren nach Anspruch 10, **dadurch gekennzeichnet, dass** als Betriebsgröße die Drehzahl verwendet wird.

12. Verfahren nach einem der Ansprüche 1 bis 9, **dadurch gekennzeichnet, dass** als Betriebsgröße eine zur Verstellkraft des Teils (20) proportionale Größe, insbesondere der Motorstrom, verwendet wird.

13. Verfahren nach Anspruch 2, **dadurch gekennzeichnet, dass** der Startwert der Pulsweite in Abhängigkeit des jeweiligen Verstellsystems (10) experimentell ermittelt wird.

14. Verfahren nach Anspruch 2, **dadurch gekennzeichnet, dass** die Pulsweite anschließend an t_{systemlose} (50) auf 100% erhöht wird.

## Claims

1. Method for controlling an adjustment process for at least one piece (20) which can be moved against at least one end stop (26, 28) by means of an electric motor (12), said piece (20) being, in particular, a motor vehicle window or sun roof, wherein, as a function of at least one operating variable of the motor (12), trapping events are detected, and when a trapping event is detected the motor (12) is stopped and/or its running direction is reversed, wherein the motor (12) is actuated with lower power in its start-up phase (52) than in the subsequent operating phase (54), **characterized in that** the power at the beginning of the start-up phase (52) is controlled in such a way (for example 20% of the rated power) that the motor (12) just moves and the system slack is eliminated, but adjustment of the movable part (20) does not yet take place, wherein the rotational speed of the electric motor (12) drops after the system slack has been eliminated, and the electric motor (12) would come to a standstill if the power were not subsequently increased.

2. Method according to Claim 1, **characterized in that** the motor (12) is actuated by means of a power output stage whose control signal is pulse-width-modulated for the purpose of reducing the power.

3. Method according to Claim 1, **characterized in that** a variable voltage, which is preferably made available by means of a controllable resistor (44), is applied to the motor (12) for the purpose of reducing the power.

4. Method according to Claim 2, **characterized in that** the pulse width is kept constant until the system slack is completely eliminated, which corresponds to a time period t_{systemslack} (50) .

5. Method according to Claims 1 to 4, **characterized in that** the motor (12) is actuated with the rated power (maximum power) after the system slack has been eliminated.

6. Method according to one of Claims 1 to 4, **characterized in that** the power is increased linearly after the system slack has been eliminated.

7. Method according to one of Claims 1 to 6, **characterized in that** the power with which the motor (12) is actuated in the motor start-up phase (52) depends on the battery voltage.

8. Method according to one of Claims 1 to 7, **characterized in that** the power with which the motor (12) is activated in the motor start-up phase (52) depends on the ambient temperature.

9. Method according to one of Claims 1 to 8, **characterized in that** trapping events can be detected immediately as soon as the piece (20) starts to move.

10. Method according to one of Claims 1 to 9, **characterized in that** a variable which is inverse with respect to the adjustment force of the piece (20) is used as the operating variable.

11. Method according to Claim 10, **characterized in that** the rotational speed is used as the operating variable.

12. Method according to one of Claims 1 to 9, **characterized in that** a variable which is proportional with respect to the adjustment force of the part (20), in particular the motor current, is used as the operating variable.

13. Method according to Claim 2, **characterized in that** the starting value of the pulse width is determined experimentally as a function of the respective adjustment system (10).

14. Method according to Claim 2, **characterized in that** the pulse width is increased to 100% subsequent to t_{systemslack} (50).

## Revendications

1. Procédé de commande d'une opération de déplacement d'au moins une pièce (20) qui peut être déplacée au moyen d'un moteur électrique (12) vers au moins une butée d'extrémité (26, 28), en particulier une fenêtre ou un toit ouvrant de véhicule automobile,
dans lequel des événements de blocage sont détectés en fonction d'au moins une grandeur de fonctionnement du moteur (12) et
dans lequel le moteur (12) est arrêté ou son sens de rotation est inversé en cas de détection d'un événement de blocage,
le moteur (12) étant commandé à une puissance plus basse dans sa phase de démarrage (52) que dans la phase de fonctionnement (54) qui suit,
**caractérisé en ce que**
au début de la phase de démarrage (52), la puissance est commandée (par exemple à 20 % de la puissance nominale) de telle sorte que le moteur (12) se déplace correctement et surmonte les pertes du système mais ne déplace pas encore la pièce mobile (20), la vitesse de rotation du moteur électrique (12) diminuant après la compensation des pertes du système et le moteur électrique (12) revenant à l'arrêt si par la suite la puissance n'a pas été augmentée.

2. Procédé selon la revendication 1, **caractérisé en ce que** le moteur (12) est commandé par un étage final de puissance dont la largeur des impulsions du signal de commande est modulée pour réduire la puissance.

3. Procédé selon la revendication 1, **caractérisé en ce que** pour réduire la puissance du moteur (12), une tension variable délivrée de préférence au moyen d'une résistance asservie (44) lui est appliquée.

4. Procédé selon la revendication 2, **caractérisé en ce que** la largeur des impulsions est maintenue constante tant que les pertes du système n'ont pas été complètement compensées, ce qui correspond à une durée t_{Systemlose} (50).

5. Procédé selon les revendications 1 à 4, **caractérisé en ce que** le moteur (12) est commandé à sa puissance nominale (puissance maximale) après que les pertes du système ont été compensées.

6. Procédé selon l'une des revendications 1 à 4, **caractérisé en ce que** la puissance est augmentée linéairement après que les pertes du système ont été compensées.

7. Procédé selon l'une des revendications 1 à 6, **caractérisé en ce que** la puissance à laquelle le moteur (12) est commandé dans la phase (52) de démarrage du moteur dépend de la tension de la batterie.

8. Procédé selon l'une des revendications 1 à 7, **caractérisé en ce que** la puissance à laquelle le moteur (12) est commandé dans la phase (52) de démarrage du moteur dépend de la température ambiante.

9. Procédé selon l'une des revendications 1 à 8, **caractérisé en ce que** les événements de blocage peuvent être détectés immédiatement après que la pièce (20) a commencé de se déplacer.

10. Procédé selon l'une des revendications 1 à 9, **caractérisé en ce que** comme grandeur de fonctionnement, on utilise une grandeur inverse de la force de déplacement de la pièce (20).

11. Procédé selon la revendication 10, **caractérisé en ce que** comme grandeur de fonctionnement, on utilise la vitesse de rotation.

12. Procédé selon l'une des revendications 1 à 9, **caractérisé en ce que** comme grandeur de fonctionnement, on utilise une grandeur proportionnelle à la force nécessaire pour déplacer la pièce (20), et en particulier le courant du moteur.

13. Procédé selon la revendication 2, **caractérisé en ce que** la valeur initiale de la largeur des impulsions est déterminée expérimentalement en fonction du système de déplacement (10) particulier.

14. Procédé selon la revendication 2, **caractérisé en ce que** la largeur des impulsions est augmentée à 100 % après que la durée t_{Systemlose} (50) s'est écoulée.
